# EUROPÄISCHE PATENTANMELDUNG

(11) **EP 4 498 188 A1**
(43) Veröffentlichungstag der Anmeldung: **29.01.2025**
(21) Anmeldenummer: 23188316.6
(22) Anmeldetag: 28.07.2023
(51) Int. Cl.: G05B 19/042

(54) **ANORDNUNG, ANTRIEBSSYSTEM, IT-NETZWERK, VERFAHREN SOWIE COMPUTER-PROGRAMMPRODUKT UND COMPUTERLESBARES MEDIUM**

(71) Anmelder: Siemens Aktiengesellschaft, 80333 München (DE)
(72) Erfinder: Uhlig, Michael, 91334 Hemhofen (DE)
(74) Vertreter: Siemens Patent Attorneys

(57) **Zusammenfassung**

Die Erfindung betrifft eine Anordnung (4) umfassend einen Frequenzumrichter zum Versorgen eines Elektromotors (3) mit Energie, wobei die Anordnung Edge-Mittel aufweist. Die Edge-Mittel sind ausgebildet, Betriebsinformationen betreffend den Frequenzumrichter (5) und/oder einen ggf. damit verbundenen oder verbindbaren Elektromotor (3) an andere Komponenten eines IT-Netzwerks (1), insbesondere eines Cloud-Netzwerks, zu übertragen.

## Beschreibung

Die vorliegende Erfindung betrifft eine Anordnung umfassend einen Frequenzumrichter zum Versorgen eines Elektromotors mit Energie. Ferner betrifft die vorliegende Erfindung ein Antriebssystem und ein IT-Netzwerk. Außerdem betrifft die vorliegende Erfindung ein Verfahren, sowie ein Computer-Programmprodukt und ein computerlesbares Medium.

In vielen industriellen Anwendungen werden Frequenzumrichter eingesetzt, um Elektromotoren, insbesondere Asynchronmotoren anzusteuern und mit elektrischer Energie zu versorgen. Derartige Frequenzumrichter sind in verschiedenen Leistungsklassen und mit verschiedenen Steuerungsgenauigkeiten verfügbar.

Ein zunehmendes Bedürfnis besteht darin, beispielsweise aus komplexen Industrieanlagen Daten zu generieren und diese Daten zum Überwachen der Anlagen einzusetzen. Dazu gehören neben Daten, welche die jeweilige Komponente einer Anlage bzw. einer Anlagensteuerung definieren bzw. identifizieren, auch Daten betreffend aktuelle Betriebsparameter oder Fehler- bzw. Störungsmeldungen. Stellen eine Vielzahl von Komponenten solche Daten bereit, so können diese beispielsweise in einer zentralen Rechnereinheit gesammelt, verarbeitet und überwacht werden. Hieraus können Rückschlüsse abgeleitet werden hinsichtlich erforderlicher Wartungstätigkeiten oder auch hinsichtlich der Anpassung bestimmter Betriebsparameter. Auch eine Störungsvorhersage, welche in der englischen Sprache als "predictive failure analysis" bezeichnet wird, kann durch entsprechend umfangreiche Datensammlungen möglich werden. Gleichzeitig können solche Daten auch herangezogen werden, um beispielsweise eine künstliche Intelligenz zu trainieren, so dass eine selbstlernende, eigenständige Überwachung stattfindet.

Eine Problematik bei der Generierung von Daten aus einem Steuerungsnetzwerk bzw. von Steuerungskomponenten besteht darin, dass bei komplexen Industrieanlagen sehr große Datenmengen entstehen, welche insbesondere die Datenübertragung in einem Netzwerk auslasten und eine erhebliche Rechnerleistung benötigen. Um dieser Problematik zu begegnen, besteht ein gewisser Trend zum so genannten Edge-Computing, das heißt, man schafft gezielt eine dezentrale Datenverarbeitung von einem zentralen Rechenzentrum weg. Das bedeutet, dass die tatsächlichen Operationen, das heißt die Erfassung, Aggregation, Aufbereitung und Analyse von Daten auch dezentral stattfinden, insbesondere dort, wo die Daten tatsächlich entstehen bzw. erfasst werden. Dadurch können Datenströme ressourcenschonend verarbeitet werden. Gleichzeitig werden Verzögerungen in der Datenübertragung vermieden, was kurze Reaktionszeiten auch ermöglicht.

Vor diesem Hintergrund besteht die Aufgabe der vorliegenden Erfindung darin, eine Anordnung mit einem Frequenzumrichter zu schaffen, welche eine einfache Datenverarbeitung von Betriebsparametern ermöglicht.

Diese Aufgabe ist bei einer Anordnung der eingangsgenannten Art dadurch gelöst, dass die Anordnung Edge-Mittel aufweist, welche ausgebildet sind, Betriebsinformationen betreffend den Frequenzumrichter und/oder einen ggf. damit verbundenen oder verbindbaren Elektromotor an andere Komponenten eines IT-Netzwerks, insbesondere eines Cloud-Netzwerks, zu übertragen.

Der Erfindung liegt damit die grundsätzliche Überlegung zugrunde, dezentral insbesondere in der Nähe des Frequenzumrichters Edge-Mittel vorzusehen, welche die Daten, die vom Frequenzumrichter bereitgestellt werden, erfassen und gegebenenfalls verarbeiten und/oder an andere Komponenten eines IT-Netzwerks übermitteln können.

Die Edge-Mittel können beispielsweise eine Edgebox enthalten oder daraus bestehen. Eine solche Edgebox wird auch als "industrial edge device" bezeichnet und beinhaltet bevorzugt eine eigene Rechnereinheit, also einen eigenständigen Computer, insbesondere einen Industrie-PC, oder ist als ein solcher ausgebildet. Die Edgebox kann permanent Daten vom Frequenzumrichter oder betreffend den Frequenzumrichter, insbesondere Betriebsparameter, oder einen bevorzugt nicht zur erfindungsgemäßen Anordnung gehörenden Elektromotor, der mit dem Frequenzumrichter verbunden ist, übernehmen und entsprechend verarbeiten. Dadurch können grundsätzlich lange Kommunikationswege und damit lange Reaktionszeiten verhindert werden. Gleichzeitig werden die Kommunikationskanäle, beispielsweise Feldbussysteme oder dergleichen, nicht mit großen Datenmengen belastet.

Gemäß einer bevorzugten Ausführungsform sind der Frequenzumrichter und die Edgebox separate Komponenten, welche über eine am Frequenzumrichter vorgesehene Schnittstelle, insbesondere über eine ethernetbasierte Schnittstelle, miteinander verbunden sind. Bei einer solchen Ausgestaltung sind die Edgebox und der Frequenzumrichter zwar separate Komponenten, jedoch bevorzugt in unmittelbarer Nähe zueinander angeordnet. Beispielsweise können der Frequenzumrichter und die Edgebox in einem gemeinsamen Schaltschrank untergebracht sein. Durch die räumliche Nähe wird die Zeit für die Datenübertragung sehr kurz, so dass eine schnelle Reaktionszeit auf Basis der von dem Frequenzumrichter an die Edgebox übermittelten Daten möglich ist.

Alternativ können die Edgebox und der Frequenzumrichter als Baueinheit ausgebildet sein. In diesem Fall bilden die Edge-box und der Frequenzumrichter gemeinsam eine Baueinheit. Das bedeutet, dass sie im IT-Netzwerk bevorzugt nur als einzelne Komponente sichtbar sind. Insbesondere die Konfiguration eines solchen IT-Netzwerks wird auf diese Weise vereinfacht.

Gemäß einer bevorzugten Ausgestaltung ist die Edgebox mit dem Frequenzumrichter über eine interne Schnittstelle des Frequenzumrichters verbunden. Konkret führt eine solche Baueinheit, in welche die Edgebox und der Frequenzumrichter integriert sind, zu einer einfachen Kommunikation, da es sich, von außen betrachtet, zwischen der Edgebox und dem Frequenzumrichter um eine interne Schnittstelle handelt. Dadurch kann diese interne Schnittstelle optimal gestaltet werden im Hinblick auf Performance, das verwendete Protokoll und die Bandbreite. Der Anwender muss diese interne Schnittstelle nicht separat konfigurieren oder einstellen.

Alternativ können die Edge-Mittel in den Frequenzumrichter integriert sein. Der Frequenzumrichter kann eine Rechnereinheit enthalten, beispielsweise in Form einer CPU, und die Funktionalität des Edge-Computings bzw. einer Edgebox wie zuvor beschrieben kann in diese Rechnereinheit des Frequenzumrichters integriert sein. Mit anderen Worten werden die Tätigkeiten und Funktionalitäten der zuvor beschriebenen Edgebox durch die Rechnereinheit des Frequenzumrichters wahrgenommen. Eine eigenständige Edgebox ist in diesem Fall nicht erforderlich. Der Frequenzumrichter kann in diesem Fall die Übermittlung von Betriebsinformationen betreffend den Frequenzumrichter und/oder einen ggf. damit verbundenen oder verbindbaren Elektromotor an andere Komponenten eines IT-Netzwerks übernehmen. Auf diese Weise entfällt auch die interne Schnittstelle, über welche eine Edgebox mit dem Frequenzumrichter verbunden ist, was zu einer weiter verbesserten Performance und zu einer einfacheren Konfiguration des IT-Netzwerks führt.

Die Edge-Mittel, insbesondere die Edgebox, können eine Kommunikationsschnittstelle zum Verbinden mit Komponenten eines IT-Netzwerks, insbesondere eines Cloud-Netzwerks, aufweisen. Die Kommunikationsschnittstelle ist bevorzugt eine ethernetbasierte Schnittstelle, insbesondere eine Profinet-Schnittstelle. Prinzipiell kann es sich bei der Schnittstelle um beliebige, in der Industrie verbreitete Schnittstellen handeln. Wenn die Edge-Mittel in den Frequenzumrichter integriert sind, kann die Kommunikationsschnittstelle an dem Frequenzumrichter, insbesondere an einer Rechnereinheit des Frequenzumrichters vorgesehen sein.

Bevorzugt enthalten die Edge-Mittel, insbesondere die Edgebox und/oder der Frequenzrichter, eine Software. Konkret kann die Software auf einer Rechnereinheit der Edgebox und/oder des Frequenzumrichters, insbesondere auf einem entsprechenden Speichermedium, vorgesehen sein. Die Software kann ausgebildet sein, Daten, insbesondere Betriebsparameter, welche der Frequenzumrichter bereitstellt oder den Frequenzumrichter betreffen, zu empfangen und zu verarbeiten. Die Software kann ferner ausgebildet sein, in einem IT-Netzwerk Daten zu übertragen und mit anderen Komponenten im IT-Netzwerk zu kommunizieren.

Bei den Betriebsparametern kann es sich beispielsweise um Vibrationen, Temperatur, Drehzahl, etc. handeln. Die Software der Edgebox kann ausgebildet sein, basierend auf einem Modell des Motors Optimierungen, Effizienzsteigerungen und Verbesserung der Verfügbarkeit zu berechnen beziehungsweise umzusetzen. Mit anderen Worten umfassen die Edge-Mittel, insbesondere die Edgebox, nicht nur die Funktion der Datenerfassung und Datenübertragung, sondern auch der Datenverarbeitung beziehungsweise Manipulation der Daten. Die Software kann beispielsweise ausgebildet sein, eine Trendanalyse durchzuführen, und/oder KI-Algorithmen enthalten bzw. darauf zurückgreifen, um den Betrieb des Frequenzumrichters bzw. eines damit verbundenen Motors zu optimieren. Die Software kann auch ausgebildet sein, Daten in ein bestimmtes Ziel-Datenformat oder in ein bestimmtes Kommunikationsprotokoll umzuformatieren. Anders formuliert kann die Edgebox ausgebildet sein, Betriebsinformationen in bestimmte Datenformate oder in bestimmte Protokolle umzuformatieren.

Wenn die Edgebox und der Frequenzumrichter als Baueinheit ausgebildet sind und die Edgebox und der Frequenzumrichter über eine interne Schnittstelle miteinander verbunden sind, so liegt ein wesentlicher Vorteil darin, dass von außen betrachtet die Schnittstelle und der daraus resultierende Aufwand insbesondere bei der Konfiguration und bei dem Betrieb zwischen der Edgebox und dem Frequenzumrichter wegfällt, da es sich nunmehr um eine interne Schnittstelle handelt. Wie diese interne Schnittstelle ausgestaltet ist, kann normfrei erfolgen, das heißt nach einem beliebigen Protokoll. Mit anderen Worten verringert sich der Integrationsaufwand für eine solche Anordnung in einem IT-Netzwerk oder in einem Edgesystem. Darüber hinaus verringert sich die Menge der übertragenen Daten, da der Austausch von Daten zwischen der Edgebox und dem Frequenzumrichter von anderen Komponenten des IT-Netzwerks nicht wahrgenommen werden, sondern nur die Daten, die von der Edgebox an andere Komponenten über die Kommunikationsschnittstelle übermittelt werden.

Sind die Edge-Mittel in den Frequenzumrichter integriert, so liegt nicht einmal mehr eine interne Schnittstelle zwischen einer Edgebox und dem Frequenzumrichter vor. Dies verringert weiter den Integrationsaufwand für eine solche Anordnung in einem IT-Netzwerk oder in einem Edgesystem.

In weiterer Ausgestaltung können die Edge-Mittel, insbesondere die Edgebox, ausgebildet sein, Betriebsparameter des Frequenzumrichters und/oder eines damit verbundenen Elektromotors zu erfassen und zu verarbeiten. Mit anderen Worten kann die Edgebox eine Software beinhalten, welche Betriebsparameter des Frequenzumrichters empfängt und verarbeitet.

Ferner können die Edge-Mittel, insbesondere die Edgebox, ausgebildet sein, Betriebsinformationen auf Basis der erfassten Parameter bereitzustellen und an andere Komponenten eines IT-Netzwerks, insbesondere eines Cloud-Netzwerks, bevorzugt an eine zentrale Rechnereinheit eines IT-Netzwerks, zu übertragen. Diese Ausgestaltung beruht auf der Überlegung, dass ein IT-Netzwerk, welches als Edgesystem ausgebildet sein kann oder ein solches bilden kann, die Daten, welche von einem Frequenzumrichter bzw. von einem damit verbundenen Elektromotor zur Verfügung gestellt werden, verarbeitet, wobei die Edge-Mittel, insbesondere die Edgebox, bedarfsweise die entsprechenden Betriebsinformationen überträgt.

Die Edge-Mittel, insbesondere die Edgebox, können ausgebildet sein, die Betriebsinformationen in Form eines festgelegten Datenformats und/oder in Form eines festgelegten Datenpakets zu übertragen. Mit anderen Worten kann ein bestimmtes Protokoll eines Datenformats oder eines Datenpakets verwendet werden, welches insbesondere einheitlich im IT-Netzwerk gebraucht wird, so dass jeder Empfänger die Betriebsinformationen weiterverarbeiten kann.

Konkret können die Betriebsinformationen Daten zur Identifikation des Frequenzumrichters und/oder eines damit verbundenen Elektromotors umfassen. Dabei kann es sich beispielsweise um Identifikationsnummern oder eine Kennung oder einen Namen handeln, durch welche die entsprechende Komponente eindeutig im Netzwerk identifiziert werden kann. Möglich ist auch, dass die Betriebsinformationen Daten zu aktuellen Betriebsparametern, insbesondere zur Amplitude und/oder Frequenz des Ausgangsstroms und/oder zur Form des Ausgangsstroms und/oder zur Spannung und/oder zur Drehzahl und/oder zur Drehrichtung und/oder zu Vibrationen eines mit dem Frequenzumrichter verbundenen Elektromotors umfassen. Derartige Daten können vom Frequenzumrichter bzw. vom damit verbundenen Elektromotor zur Verfügung gestellt werden. Dazu können entsprechende Sensoren, beispielsweise ein Näherungssensor und/oder ein Drehzahlsensor und/oder ein Stromsensor und/oder ein Vibrationssensor am Frequenzumrichter und/oder am Elektromotor vorhanden sein.

Die Betriebsinformationen können auch Daten zu aktuellen Umgebungsbedingungen, bevorzugt zur Temperatur oder zur Luftfeuchtigkeit beinhalten. Auf diese Weise kann die Betriebssicherheit überwacht werden und es können möglicherweise auch Voraussagen über zukünftiges Versagen abgeleitet werden. Konkret kann der Frequenzumrichter und/ oder der mit diesem verbundenen Elektromotor dazu entsprechende Sensoren, insbesondere mindestens einen Temperatursensor und/oder mindestens einen Luftfeuchtigkeitssensor aufweisen.

Ferner können die Betriebsinformationen Daten zu Störungen und/oder Fehlermeldungen und/oder Daten zur Betriebsdauer umfassen. Gerade wenn Störungen auftreten, kann eine in der Nähe befindliche Edgebox, bzw. eine mit dem Frequenzumrichter eine Baueinheit bildende Edgebox schnell reagieren und die Signale des Frequenzumrichters, mit dem ein mit diesem verbundenen Elektromotor gesteuert wird, schnell anpassen. Mit anderen Worten ist durch die räumliche Nähe die Reaktionszeit sehr gering. Insbesondere ergibt sich eine sehr geringe Reaktionszeit, wenn die Edge-Mittel direkt in den Frequenzumrichter integriert sind.

Die Edge-Mittel, insbesondere die Edgebox, können ausgebildet sein, ausgehend von den erfassten und verarbeiteten Betriebsparametern Anweisungen für den Betreiber hinsichtlich Fehlerbehebungen und/oder Wartungstätigkeiten auszugeben und/oder an andere Komponenten eines IT-Netzwerks zu übertragen. Mit anderen Worten kann eine insbesondere auf der Edgebox oder auf dem Frequenzumrichter installierte Software derart ausgestaltet sein, dass sie Anweisungen für den Betreiber ausgeben kann. Insbesondere können eine Fehlerquelle und bevorzugt auch eine Anleitung zur Behebung dieser Fehlerquelle ausgegeben werden. Auch Wartungstätigkeiten können in Abhängigkeit von den erfassten Betriebsparametern vorgegeben werden. Beispielsweise kann die Edgebox und/oder der Frequenzumrichter ein Display aufweisen oder mit einem Display verbunden sein, auf welchen die entsprechenden Anweisungen oder Hinweise ausgegeben werden. Möglich ist auch, diese Anweisungen an andere Komponenten eines IT-Netzwerks, zum Beispiel an eine zentrale Rechnereinheit, zu übertragen und beispielsweise an einem zentralen Leitstand auszugeben.

Gemäß einer bevorzugten Ausgestaltung kann der Frequenzumrichter einen Anschluss oder mehrere Anschlüsse zum Verbinden mit einem oder mehreren Elektromotor(en) aufweisen.

Die der Erfindung zugrundeliegende Aufgabe ist ferner gelöst durch ein Antriebssystem umfassend eine Anordnung wie zuvor beschrieben und mindestens einem Elektromotor, welcher mit dem Frequenzumrichter verbunden ist und von dem Frequenzumrichter mit elektrischer Energie versorgt wird oder versorgt werden kann.

Die der Erfindung zugrundeliegende Aufgabe ist ferner gelöst durch ein IT-Netzwerk, insbesondere ein Cloud-Netzwerk, umfassend ein Antriebssystem wie zuvor beschrieben oder eine Anordnung wie zuvor beschrieben. Das IT-Netzwerk kann bevorzugt ein Edgesystem sein oder ein solches bilden.

Die vorliegende Erfindung schafft ferner ein Verfahren zum Betreiben einer Anordnung oder eines Antriebssystems oder eines IT-Netzwerks, insbesondere jeweils wie zuvor beschrieben, wobei die Edge-Mittel, insbesondere die Edgebox, Betriebsinformationen auf Basis der erfassten Betriebsparameter bereitstellen und/oder an andere Komponenten eines IT-Netzwerks, insbesondere eines Cloud-Netzwerks, bevorzugt an eine zentrale Rechnereinheit eines IT-Netzwerks, übertragen.

Bevorzugt erfassen und verarbeiten die Edge-Mittel, insbesondere die Edgebox, Betriebsparameter des Frequenzumrichters und/oder eines damit verbundenen oder verbindbaren Elektromotors. Auf Basis der erfassten Betriebsparameter können die Edge-Mittel, insbesondere die Edgebox, Betriebsinformationen bereitstellen und an andere Komponenten eines IT-Netzwerks, insbesondere eines Cloud-Netzwerks, bevorzugt an eine zentrale Rechnereinheit eines IT-Netzwerks, übertragen. In weiterer Ausgestaltung können die Edge-Mittel, insbesondere die Edgebox, die Betriebsinformation in Form eines festgelegten Datenformats und/oder in Form eines festgelegten Datenpakets übertragen.

Die Übertragung von Daten erfolgt bevorzugt über eine Kommunikationsschnittstelle, welche insbesondere an der Edgebox oder am Frequenzumrichter vorgesehen ist.

Die Edge-Mittel insbesondere die Edgebox, können auch eine Verarbeitung der Daten bzw. eine Manipulation der Daten bzw. der Betriebsparameter oder der Betriebsinformation durchführen. Dazu kann beispielweise auf KI-Algorithmen zurückgegriffen werden, um den Betrieb des Frequenzumrichters bzw. eines damit verbundenen Motors zu optimieren.

Die Verarbeitung der Daten kann in einer Rechnereinheit der Edgebox bzw. des Frequenzumrichters stattfinden. Wenn die Edge-Mittel in den Frequenzumrichter integriert sind, findet die Verarbeitung von Daten ausschließlich in dem Frequenzumrichter, insbesondere in einer Rechnereinheit des Frequenzumrichters statt. Wenn die Edge-Mittel eine Edgebox umfassen und der Frequenzumrichter und die Edgebox als Baueinheit ausgebildet sind, so werden die entsprechenden Betriebsparameter des Frequenzumrichters und/oder eines damit verbundenen oder verbindbaren Elektromotors bevorzugt über eine interne Schnittstelle an die Edgebox übertragen.

Die Betriebsinformationen können Daten zur Identifikation des Frequenzumrichters und/oder eines damit verbundenen Elektromotors und/oder Daten zu aktuellen Betriebsparametern, insbesondere zur Amplitude und/oder Frequenz des Ausgangsstroms und/oder zur Form des Ausgangsstroms und/oder zur Spannung und/oder zur Drehzahl und/oder zur Drehrichtung und/oder zu Vibrationen eines mit dem Frequenzumrichter verbundenen Elektromotors, und/oder Daten zu aktuellen Umgebungsbedingungen, bevorzugt zu Temperatur oder zu Luftfeuchtigkeit, und/oder Daten zu Störungen und/oder Fehlermeldungen und/oder Daten zur Betriebsdauer umfassen.

Ein wesentlicher Vorteil der Edge-Mittel, insbesondere der Edgebox, besteht darin, dass nicht sämtliche vom Frequenzumrichter bzw. vom damit verbundenen Elektromotor bereitgestellten Daten an andere Komponenten eines IT-Netzwerks übertragen werden können, sondern bedarfsweise nur ausgewählte Daten, die für den Betrieb relevant sind. Mit anderen Worten können die Edge-Mittel auch derart ausgestaltet sein, dass nur bestimmte Daten übertragen werden. Insbesondere kann die Edgebox oder der Frequenzumrichter, insbesondere eine darauf installierte Software, derart ausgebildet sein, dass die Daten vorbearbeitet werden und nur bestimmte Bestandteile der Daten oder überarbeitete und angepasste Daten, bzw. Betriebsinformationen zu Betriebsparametern übermittelt werden.

Die Edge-Mittel können ausgehend von den erfassten und verarbeiteten Betriebsparametern Anweisungen für den Betreiber hinsichtlich Fehlerbehebung und/oder Wartungstätigkeiten ausgeben und/oder an andere Komponenten eines IT-Netzwerks übertragen.

Die Erfindung schafft ferner ein Verfahren zum Konfigurieren eines IT-Netzwerks, welches das rechnergestützte Konfigurieren des IT-Netzwerks unter Verwendung einer Konfigurationssoftware umfasst, wobei ein virtuelles Abbild des IT-Netzwerks mit den einzelnen Komponenten des IT-Netzwerks erstellt wird, dadurch gekennzeichnet, dass der Frequenzumrichter und die Edge-Mittel, insbesondere die Edgebox, als eine einzige virtuelle Komponente abgebildet werden.

Mit anderen Worten werden die Edge-Mittel, insbesondere eine Edgebox, und der Frequenzumrichter nicht mehr als separate Komponenten konfiguriert, sondern als eine virtuelle Komponente, so dass bei der Konfiguration des Netzwerks eine Schnittstelle zwischen Edge-Mittel und Frequenzumrichter nicht mehr erforderlich ist. Dadurch verringert sich der Konfigurationsaufwand, da diese Schnittstelle am Frequenzumrichter nicht mehr herstellerabhängig mit einer spezifischen Applikationssoftware programmiert, bzw. versehen werden muss. Insbesondere wenn die Edgebox und der Frequenzumrichter als eine Baueinheit ausgebildet sind, kann die interne Schnittstelle frei gestaltet werden, d.h. nach einem beliebigen Protokoll funktionieren. Wenn die Edge-Mittel in den Frequenzumrichter integriert sind, kann die Konfiguration weiter vereinfacht werden.

Die der Erfindung zugrundeliegende Aufgabe ist ferner gelöst durch ein Computer-Programmprodukt umfassend Anweisungen, die, als Programmprodukt auf einen Computer, insbesondere auf einer Edgebox oder einen Frequenzumrichter, ausgeführt werden, den Computer veranlassen, ein Verfahren wie zuvor beschrieben durchzuführen. Ferner schafft die Erfindung ein computerlesbares Medium umfassend ein solches Computer-Programmprodukt.

Für die weitere Ausgestaltung der Erfindung wird auf die Unteransprüche und auf die nachstehende Beschreibung eines Ausführungsbeispiels unter Bezugnahme auf die Zeichnungen verwiesen. In der Zeichnung zeigt:

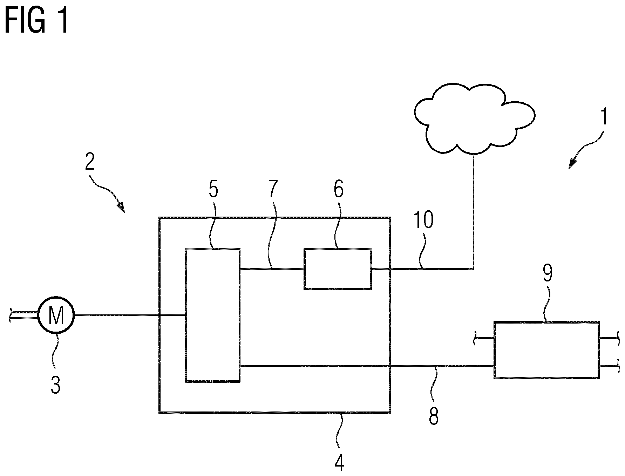

- Figur 1: ein Ausführungsbeispiel eines erfindungsgemäßen IT-Netzwerks in einer schematischen Darstellung.

Die Figur 1 zeigt ein als Cloud-Netzwerks ausgebildetes IT-Netzwerk 1 gemäß der vorliegenden Erfindung. Dieses umfasst ein Antriebssystem 2 mit einem Elektromotor 3 und einer Anordnung 4. Die Anordnung 4 umfasst einen Frequenzumrichter 5, welcher mit dem Elektromotor 3 verbunden ist und den Elektromotor 3 bedarfsweise mit elektrischer Energie versorgt.

Ferner umfasst die Anordnung 4 Edge-Mittel, welche vorliegend eine Edgebox 6 aufweisen. Diese ist mit dem Frequenzumrichter 5 über eine interne Schnittstelle 7 verbunden. Der Frequenzumrichter 5 und die Edgebox 6 sind dabei als Baueinheit ausgebildet.

Der Frequenzumrichter 5 ist wiederum über eine externe Schnittstelle 8 mit einer zentralen Steuerungseinrichtung 9 verbunden. Bei der zentralen Steuereinrichtung 9 kann es sich beispielsweise um eine speicherprogrammierbare Steuerung (SPS) handeln.

Die Edgebox 6 ist außerdem über eine Kommunikationsschnittstelle 10 mit weiteren Komponenten des IT-Netzwerks 1, welche schematisch in der Figur 1 als Cloud dargestellt sind, verbunden.

Der Frequenzumrichter 5 und der Elektromotor 3 stellen während des Betriebs Betriebsparameter der Edgebox 6, welche als Rechnereinheit ausgebildet ist, zur Verfügung. Die Edgebox 6 ist ausgebildet, Betriebsinformationen auf Basis der erfassten Betriebsparameter bereitzustellen und über die Kommunikationsschnittstelle 10 an andere Komponenten des IT-Netzwerks zu übertragen. Bei den Betriebsinformationen handelt es sich konkret um Daten zur insbesondere eindeutigen Identifikation des Frequenzumrichters 5 und des Elektromotors 3. Ferner können die Betriebsinformationen Leistungsdaten des Frequenzumrichter 5 bzw. des Elektromotors 3 und Daten zu aktuellen Betriebsparametern, insbesondere zum vom Frequenzumrichter 5 zur Versorgung des Elektromotors 3 bereitgestellten Ausgangsstroms und zu Drehzahl und zu Drehrichtung des Elektromotors 3, umfassen. Am Elektromotor können geeignete Sensoren vorgesehen sein, welche Vibrationen erfassen und entsprechende Daten über den Frequenzumrichter 5 der Edgebox 6 zur Verfügung stellen.

Die Edgebox 6 ist mit einer geeigneten Software oder eine Computerprogramm versehen und dementsprechend ausgebildet, ausgehend von den erfassten und verarbeiteten Betriebsparametern Anweisungen für den Betreiber hinsichtlich Fehlerbehebung und Wartungstätigkeiten auszugeben, bzw. solche Anweisungen über die Kommunikationsschnittstelle 10 an andere Komponenten des IT-Netzwerks 1 zu übertragen.

Durch die räumliche Nähe zwischen Frequenzumrichter 5 und Edgebox 6 sind kurze Reaktionszeiten abhängig von den übermittelten Betriebsparametern möglich. Ferner wird die Schnittstelle 7 zwischen der Edgebox 6 und dem Frequenzumrichter 5 von den anderen Komponenten des IT-Netzwerks 1 als interne Schnittstelle wahrgenommen, so dass ein spezieller softwarebasierter Gateway beim Konfigurieren und Betreiben der Anordnung 4 nicht mehr erforderlich ist. Dadurch können die Datenströme im IT-Netzwerk 1 verringert werden und die Anzahl der angeschlossenen Antriebssysteme 2 bzw. Edgeboxen 6 bei gleicher Rechnerleistung erhöht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Anordnung (4) umfassend einen Frequenzumrichter zum Versorgen eines Elektromotors (3) mit Energie, wobei die Anordnung Edge-Mittel aufweist, welche ausgebildet sind, Betriebsinformationen betreffend den Frequenzumrichter (5) und/oder einen ggf. damit verbundenen oder verbindbaren Elektromotor (3) an andere Komponenten eines IT-Netzwerks (1), insbesondere eines Cloud-Netzwerks, zu übertragen.

2. Anordnung (4) nach Anspruch 1, **dadurch gekennzeichnet, dass** die Edge-Mittel eine Edgebox (6) umfassen, wobei der Frequenzumrichter (5) und die Edgebox (6) separate Komponenten sind, welche über eine am Frequenzumrichter (5) vorgesehene Schnittstelle, insbesondere über eine ethernetbasierte Schnittstelle, miteinander verbunden sind, oder dass die Edge-Mittel eine Edgebox (6) umfassen, wobei die Edgebox (6) und der Frequenzumrichter (5) als Baueinheit ausgebildet sind, wobei, insbesondere, die Edgebox (6) mit dem Frequenzumrichter (5) über eine interne Schnittstelle (7) des Frequenzumrichters (5) verbunden ist, und/oder dass die Edge-Mittel in den Frequenzumrichter (5) integriert sind.

3. Anordnung (4) nach einem der vorherigen Ansprüche, **dadurch gekennzeichnet, dass** die Edge-Mittel, insbesondere die Edgebox (6), eine Kommunikationsschnittstelle (10) zum Verbinden mit Komponenten eines IT-Netzwerks, insbesondere eines Cloud-Netzwerks, aufweist, wobei die Kommunikationsschnittstelle insbesondere eine ethernetbasierte Schnittstelle, bevorzugt eine Profinet-Schnittstelle ist.

4. Anordnung (4) nach einem der vorherigen Ansprüche, **dadurch gekennzeichnet, dass** die Edge-Mittel, insbesondere die Edgebox (6), ausgebildet sind, Betriebsparameter des Frequenzumrichters (5) und/oder eines damit verbundenen oder verbindbaren Elektromotors (3) zu erfassen und zu verarbeiten.

5. Anordnung (4) nach Anspruch 4, **dadurch gekennzeichnet, dass** die Edge-Mittel, insbesondere die Edgebox (6), ausgebildet sind, Betriebsinformationen auf Basis der erfassten Betriebsparameter bereitzustellen und an andere Komponenten eines IT-Netzwerks (1), insbesondere eines Cloud-Netzwerks, bevorzugt an eine zentrale Rechnereinheit eines IT-Netzwerks (1), zu übertragen.

6. Anordnung (4) nach Anspruch 5, **dadurch gekennzeichnet, dass** die Edge-Mittel, insbesondere die Edgebox (6), ausgebildet sind, die Betriebsinformationen in Form eines festgelegten Datenformats und/oder in Form eines festgelegten Datenpakets zu übertragen, und/oder dass die Betriebsinformationen Daten zur Identifikation des Frequenzumrichters (5) und/oder eines damit verbundenen Elektromotors (3) und/oder Daten zu aktuellen Betriebsparametern, insbesondere zur Amplitude und/oder Frequenz des Ausgangsstroms und/oder zur Form des Ausgangsstroms und/oder zur Spannung und/oder zur Drehzahl und/oder zur Drehrichtung und/oder zu Vibrationen eines mit dem Frequenzumrichter (5) verbundenen Elektromotors (3), und/oder Daten zu aktuellen Umgebungsbedingungen, bevorzugt zur Temperatur oder zur Luftfeuchtigkeit, und/oder Daten zu Störungen und/oder Fehlermeldungen und/oder Daten zur Betriebsdauer umfassen, und/oder dass die Edge-Mittel, insbesondere die Edgebox (6), ausgebildet sind, ausgehend von den erfassten und verarbeiteten Betriebsparametern Anweisungen für den Betreiber hinsichtlich Fehlerbehebung und/oder Wartungstätigkeiten auszugeben und/oder an andere Komponenten eines IT-Netzwerks (1) zu übertragen.

7. Antriebssystem (2) umfassend eine Anordnung (4) nach einem der vorherigen Ansprüche und mindestens einem Elektromotor (3), welcher mit dem Frequenzumrichter (5) verbunden ist von dem Frequenzumrichter (5) mit elektrischer Energie versorgt wird oder werden kann.

8. IT-Netzwerk (1), insbesondere Cloud-Netzwerk, umfassend ein Antriebssystem (2) nach Anspruch 7 oder eine Anordnung nach einem der Ansprüche 1 bis 6.

9. Verfahren zum Betreiben einer Anordnung (4) nach einem der Ansprüche 1 bis 6 oder eines Antriebssystems (2) nach Anspruch 7 oder eines IT-Netzwerks (1) nach Anspruch 8, wobei die Edge-Mittel, insbesondere die Edge-Box (6), Betriebsinformationen betreffend den Frequenzumrichter (5) und/oder einen ggf. damit verbundenen oder verbindbaren Elektromotor (3) an andere Komponenten eines IT-Netzwerks (1), insbesondere eines Cloud-Netzwerks, bevorzugt, an eine zentrale Rechnereinheit eines IT-Netzwerks (1), überträgt.

10. Verfahren nach Anspruch 9, **dadurch gekennzeichnet, dass** die Edge-Mittel, insbesondere die Edgebox (6), Betriebsparameter des Frequenzumrichters (5) und/oder eines damit verbundenen oder verbindbaren Elektromotors (3) erfasst und verarbeitet, wobei, insbesondere, Betriebsinformationen auf Basis der erfassten Betriebsparameter bereitgestellt werden und an andere Komponenten eines IT-Netzwerks (1), insbesondere eines Cloud-Netzwerks, bevorzugt an einer zentrale Rechnereinheit eines IT-Netzwerks (1), übertragen.

11. Verfahren nach Anspruch 10, **dadurch gekennzeichnet, dass** Edge-Mittel, insbesondere die Edgebox (6), die Betriebsinformationen in Form eines festgelegten Datenformats und/oder in Form eines festgelegten Datenpakets überträgt und/oder dass die Betriebsinformationen Daten zur Identifikation des Frequenzumrichters (5) und/oder eines damit verbundenen Elektromotors (3) und/oder Daten zu aktuellen Betriebsparametern, insbesondere zur Amplitude und/oder Frequenz des Ausgangsstroms und/oder zur Form des Ausgangsstroms und/oder zur Spannung und/oder zur Drehzahl und/oder zur Drehrichtung und/oder zu Vibrationen eines mit dem Frequenzumrichter (5) verbundenen Elektromotors (3), und/oder Daten zu aktuellen Umgebungsbedingungen, bevorzugt zur Temperatur oder zur Luftfeuchtigkeit, und/oder Daten zu Störungen und/oder Fehlermeldungen und/oder Daten zur Betriebsdauer umfassen.

12. Verfahren nach Anspruch 10 oder 11, **dadurch gekennzeichnet, dass** Edge-Mittel, insbesondere die Edgebox (6), ausgehend von den erfassten und verarbeiteten Betriebsparametern Anweisungen für den Betreiber hinsichtlich Fehlerbehebung und/oder Wartungstätigkeiten ausgibt und/oder an andere Komponenten eines IT-Netzwerks (1) zu überträgt.

13. Verfahren zum Konfigurieren eines IT-Netzwerks nach Anspruch 8, welches die folgenden Schritte umfasst:
- Bereitstellen des IT-Netzwerks (1);
- rechnergestütztes Konfigurieren des IT-Netzwerks (1) unter Verwendung einer Konfigurationssoftware, wobei ein virtuelles Abbild der einzelnen Komponenten des IT-Netzwerks erstellt wird;
wobei der Frequenzumrichter (5) und die Edge-Mittel, insbesondere die Edgebox (6), als eine einzige virtuelle Komponente abgebildet werden.

14. Computer-Programmprodukt umfassend Anweisungen, die, wenn das Programmprodukt auf einem Computer ausgeführt wird, den Computer veranlassen, das Verfahren nach einem der Ansprüche 9 bis 12 oder das Verfahren nach Anspruch 13 durchzuführen.

15. Computerlesbares Medium umfassend ein Computer- Programmprodukt nach Anspruch 14.
